(19) Europäisches Patentamt / European Patent Office / Office européen des brevets

(11) **EP 3 876 543 A1**

(12) # EUROPEAN PATENT APPLICATION
published in accordance with Art. 153(4) EPC

(43) Date of publication:
**08.09.2021 Bulletin 2021/36**

(21) Application number: **19891244.6**

(22) Date of filing: **06.11.2019**

(51) Int Cl.:
***H04N 21/23*** *(2011.01)*

(86) International application number:
**PCT/CN2019/115889**

(87) International publication number:
**WO 2020/108248 (04.06.2020 Gazette 2020/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.11.2018 CN 201811434790**

(71) Applicant: **Huawei Technologies Co., Ltd.
Longgang District
Shenzhen, Guangdong 518129 (CN)**

(72) Inventors:
- ZHANG, Wenjie
  Shenzhen, Guangdong 518129 (CN)
- WANG, Mang
  Shenzhen, Guangdong 518129 (CN)

(74) Representative: **Kreuz, Georg Maria
Huawei Technologies Duesseldorf GmbH
Riesstraße 25
80992 München (DE)**

(54) **VIDEO PLAYBACK METHOD AND APPARATUS**

(57) A video playing method and an apparatus are provided, to resolve a prior-art problem that user experience is affected because displayed text information cannot summarize video content well. In this application, a terminal device sends, to a server, a first request for an address of a video to be played by the terminal device, and receives a first response sent by the server, where the first response includes the video address and dotting information of the video, and the dotting information includes a dotting position of the video and a storage address of a video clip corresponding to the dotting position. The terminal device obtains the video based on the video address, and loads the corresponding video clip in the dotting position based on the storage address of the video clip corresponding to the dotting position. After loading the video clip, when playing the video, the terminal device may also display the video clip corresponding to the dotting position of the video. Compared with text information, the video clip is more intuitive, and can help a user learn of video content more conveniently, quickly, and objectively.

FIG. 3

**Description**

This application claims priority to Chinese Patent Application No. 201811434790.9 with the China National Intellectual Property Administration on November 28, 2018 and entitled "VIDEO PLAYING METHOD AND APPARATUS", which is incorporated herein by reference in its entirety.

**TECHNICAL FIELD**

This application relates to the field of communications technologies, and in particular, to a video playing method and an apparatus.

**BACKGROUND**

With rapid development of multimedia technologies and network technologies, digital videos grow rapidly. Competition between video platforms is increasingly fierce. To improve user experience and attract more users' attention on video content, a video platform usually performs marking in positions of highlights in a video. For example, dotting is performed on a progress bar of the video to form a plurality of dotting positions. When a user touches or taps a dotting position, text information of video content in the dotting position is displayed in the dotting position. This helps the user to switch, in a relatively short time, to a position of a section that the user wants to watch, and also ensures that the user can quickly find a relatively highlighting section in the video.

However, in order not to affect the user to watch the video normally, limited by a video interface, the displayed text information is usually relatively brief sentences. For some movies and TV series with intricate plots, the brief sentences can express only limited content, and consequently the user cannot understand video content well. The text information cannot summarize the video content well, and consequently user experience is affected.

**SUMMARY**

This application provides a video playing method and an apparatus, to resolve a prior-art problem that user experience is affected because displayed text information cannot summarize video content well.

According to a first aspect, an embodiment of this application provides a video playing method. The method includes: First, a server receives a first request from a terminal device, where the first request is used to request an address of a video to be played by the terminal device. After receiving the first request, the server may determine the video address and dotting information of the video, use a first response to carry the video address and the dotting information, and send the first response to the terminal device, where the dotting information includes a dotting position of the video and a storage address of a video clip corresponding to the dotting position.

According to the foregoing method, when the terminal device is to play the video, the terminal device may interact with the server to obtain both the video address and the dotting information of the video. The dotting information includes the storage address of the video clip corresponding to the dotting position of the video. When playing the video, the terminal device may play the video clip in the dotting position, so that video content in the dotting position can be more intuitively displayed, and user experience can be effectively improved.

In a possible design, the server sends the first response to the terminal device, and the terminal device may interact with the server to obtain the video clip corresponding to the dotting position. Specifically, the server may first receive a second request sent by the terminal device, where the second request is used to request the video clip corresponding to the dotting position, and the second request includes the storage address of the video clip corresponding to the dotting position. Then, the server obtains, based on the storage address of the video clip corresponding to the dotting position, the video clip corresponding to the dotting position, and sends a second response to the terminal device, where the second response includes the video clip corresponding to the dotting position.

According to the foregoing method, when the terminal device is to obtain the video clip, the terminal device may interact with the server to relatively flexibly and conveniently obtain the video clip based on the storage address of the video clip corresponding to the dotting position.

In a possible design, before the server sends the first response to the terminal device, the server needs to first determine the dotting information, that is, determine the dotting position and the video clip corresponding to the dotting position. A specific process is as follows: The server first segments the video into a plurality of video clips. Then, the server determines a degree of highlighting of each video clip based on a preset neural network model, and selects N video clips based on the degree of highlighting of each video clip. After selecting the N video clips, the server determines N dotting positions of the video based on positions of the N video clips in the video. In this way, one of the dotting positions corresponds to one of the N video clips.

According to the foregoing method, the determined dotting position is a position of a video clip related to a degree of highlighting in the video, so that the terminal device can display a relatively highlighting video clip, and a user can watch a highlighting clip in the video relatively quickly.

In a possible design, when determining the degree of highlighting of each video clip based on the preset neural network model, the server may first extract a first feature of each video clip based on the preset neural network model, where the first feature includes some or all of the following: a temporal feature of a frame sequence and a spatial feature of the frame sequence. That is, the first feature is an attribute of the video clip. Then, the server determines the degree of highlighting of each video clip based on the first feature of each video clip.

According to the foregoing method, the server can determine the degree of highlighting based on the attribute of the video clip, and the degree of highlighting (which may be referred to as a degree of highlighting for short) of the video clip can be relatively objectively reflected.

In a possible design, the server segments the video into the plurality of video clips in many manners, and one of the manners is listed as follows:

The server first performs shot segmentation on the video to obtain a plurality of groups of image frames, where each group of image frames includes a plurality of consecutive image frames. Then, the server synthesizes the plurality of groups of image frames into one or more video clips with a preset length.

According to the foregoing method, shot segmentation is performed before a video clip is obtained through synthesis. The shot segmentation can ensure that integrity of content of the video clip subsequently obtained through synthesis is not affected after the segmentation, and the video clip can be provided to the user well.

In a possible design, the server segments the video into the plurality of video clips in many manners, and another of the manners is listed as follows:

The server first performs shot segmentation on the video to obtain a plurality of groups of image frames, where each group of image frames includes a plurality of consecutive image frames. Then, image frames that display similar scenes or characters in the plurality of groups of image frames are synthesized into one or more video clips. That is, a similarity between any two adjacent frames of images in one video clip falls within a preset range.

According to the foregoing method, the server may extract image frames with similar scenes or characters and synthesize the image frames into a video clip, so that displayed content of the video clip is strongly correlated, and the user can have better viewing experience.

According to a second aspect, an embodiment of this application provides a video playing method. The method includes: First, after determining to play a video, or after determining that there is a video playing requirement subsequently, a terminal device sends a first request to a server, and then receives a first response sent by the server. The first request is used to request an address of the video to be played by the terminal device, the first response includes the video address and dotting information of the video, and the dotting information includes a dotting position of the video and a storage address of a video clip corresponding to the dotting position. After obtaining the video address and the dotting information, the terminal device may obtain the video based on the video address, and may further load the corresponding video clip in the dotting position based on the storage address of the video clip corresponding to the dotting position. After loading the video clip, the terminal device may play the video and the video clip.

According to the foregoing method, when playing the video, the terminal device may also display the video clip corresponding to the dotting position of the video. Compared with text information, the video clip is more intuitive, and can help a user learn of video content more conveniently, quickly, and objectively.

In a possible design, when loading the corresponding video clip in the dotting position based on the storage address of the video clip corresponding to the dotting position, the terminal device may interact with the server to obtain the video clip, and load the video clip. First, the terminal device may send a second request to the server, where the second request is used to request the video clip corresponding to the dotting position, and the second request includes the storage address of the video clip corresponding to the dotting position. Then, the terminal device receives a second response sent by the server, where the second response includes the video clip corresponding to the dotting position. After receiving the second response, the terminal device loads the corresponding video clip in the dotting position based on the second response.

According to the foregoing method, when the terminal device is to obtain the video clip, the terminal device may interact with the server to obtain the video clip from the server more flexibly and conveniently.

In a possible design, when playing the video, the terminal device displays a video clip corresponding to at least one dotting position closest to a current playing position.

According to the foregoing method, to-be-played video content can be displayed to the user relatively conveniently, and displaying the video clip may help the user learn of the video content more conveniently.

In a possible design, when playing the video, the terminal device may play, after receiving a trigger operation in the dotting position, the video clip corresponding to the dotting position.

According to the foregoing method, video content that the user wants to learn of can be displayed to the user relatively conveniently and intuitively, and user experience can be better improved.

According to a third aspect, an embodiment of this application provides a video clip generation method. The method includes: First, a server may segment a video into a plurality of video clips. Then, the server determines a degree of highlighting of each video clip based on a preset neural network model. In addition, the server may further select N video clips from the plurality of video clips based on the degree of highlighting of each video clip, and perform video synthesis on the N video clips, for example, may obtain a short video through synthesis. The server may further provide the short video for the terminal device.

According to the foregoing method, a degree of highlighting of a video clip that is determined based on the preset neural network model is more objective, so that the server can extract a relatively highlighting clip from the video and perform video synthesis on the highlighting clip, and play the highlighting clip to a user for watching through the terminal device, and the user can learn of video content relatively quickly and intuitively.

According to a fourth aspect, an embodiment of this application provides a video clip generation method. The method includes: First, a server may first segment a video into a plurality of video clips. Then, the server determines a degree of highlighting of each video clip based on a preset neural network model. In addition, the server may select N video clips from the plurality of video clips based on the degree of highlighting of each video clip. Next, the server may store the N video clips. The server may further share the stored N video clips with the terminal device.

According to the foregoing method, a degree of highlighting of a video clip that is determined based on the preset neural network model may more directly reflect the degree of highlighting of the video clip. The server may store a relatively highlighting video clip in the video, and display the video clip to a user through the terminal device, so that the video can have more attraction for the user.

According to a fifth aspect, an embodiment of this application further provides a server. For beneficial effects, refer to the description in the first aspect. Details are not described herein again. The server has functions of implementing actions in the method example of the first aspect. The functions may be implemented by hardware, or implemented by hardware executing corresponding software. The hardware or the software includes one or more modules corresponding to the foregoing functions. In a possible design, a structure of the server includes a receiving unit and a sending unit, and may further include a processing unit. These units can execute corresponding functions in the foregoing method example of the first aspect. For details, refer to the detailed descriptions in the method example. Details are not described herein again.

According to a sixth aspect, an embodiment of this application further provides a terminal device. For beneficial effects, refer to the description in the second aspect. Details are not described herein again. The terminal device has functions of implementing actions in the method example of the second aspect. The functions may be implemented by hardware, or implemented by hardware executing corresponding software. The hardware or the software includes one or more modules corresponding to the foregoing functions. In a possible design, a structure of the terminal device includes a sending unit, a receiving unit, a loading unit, and a playing unit. These units can execute corresponding functions in the foregoing method example of the second aspect. For details, refer to the detailed descriptions in the method example. Details are not described herein again.

According to a seventh aspect, an embodiment of this application further provides a server. For beneficial effects, refer to the description in the third aspect. Details are not described herein again. The server has functions of implementing actions in the method example of the third aspect. The functions may be implemented by hardware, or implemented by hardware executing corresponding software. The hardware or the software includes one or more modules corresponding to the foregoing functions. In a possible design, a structure of the server includes a segmentation unit, a determining unit, a selection unit, and a synthesis unit, and may further include a storage unit. These units can execute corresponding functions in the foregoing method example of the third aspect. For details, refer to the detailed descriptions in the method example. Details are not described herein again.

According to an eighth aspect, an embodiment of this application further provides a server. For beneficial effects, refer to the description in the fourth aspect. Details are not described herein again. The server has functions of implementing actions in the method example of the fourth aspect. The functions may be implemented by hardware, or implemented by hardware executing corresponding software. The hardware or the software includes one or more modules corresponding to the foregoing functions. In a possible design, a structure of the server includes a segmentation unit, a determining unit, a selection unit, and a storage unit. These units can execute corresponding functions in the foregoing method example of the fourth aspect. For details, refer to the detailed descriptions in the method example. Details are not described herein again.

According to a ninth aspect, an embodiment of this application further provides a server. For beneficial effects, refer to the description in the first aspect. Details are not described herein again. A structure of the server includes a processor, and may further include a transceiver and a memory. The processor is configured to support the terminal device in performing corresponding functions in the method in the first aspect. The memory is coupled to the processor and stores a program instruction and data that are necessary for the server. The transceiver is configured to communicate with another device.

According to a tenth aspect, an embodiment of this application further provides a terminal device. For beneficial effects, refer to the description in the second aspect. Details are not described herein again. A structure of the terminal device includes a processor and a transceiver, and may further include a memory. The processor is configured to support the terminal device in performing corresponding functions in the method in the second aspect. The memory is coupled to the processor and stores a program instruction and data that are necessary for the terminal device. The transceiver is configured to communicate with another device. A display may be further included, and is configured to receive an instruction from the processor and display a video or a video clip.

According to an eleventh aspect, an embodiment of this application further provides a server. For beneficial effects, refer to the description in the third aspect. Details are not described herein again. A structure of the server includes a processor, and may further include a transceiver and a memory. The processor is configured to support the terminal device in performing corresponding functions in the method in the third aspect. The memory is coupled to the processor and stores a program instruction and data that are necessary for the server. The transceiver is configured to communicate with another device.

According to a twelfth aspect, an embodiment of this application further provides a server. For beneficial effects, refer to the description in the fourth aspect. Details are not described herein again. A structure of the server includes a processor, and may further include a transceiver and a memory. The processor is configured to support the terminal device in performing corresponding functions in the method in the fourth aspect. The memory is coupled to the processor and stores a program instruction and data that are necessary for the server. The transceiver is configured to communicate with another device.

According to a thirteenth aspect, this application further provides a computer readable storage medium. The computer readable storage medium stores an instruction, and when the instruction is run on a computer, the computer is enabled to perform the methods in the foregoing aspects.

According to a fourteenth aspect, this application further provides a computer program product including an instruction. When the instruction is run on a computer, the computer is enabled to perform the methods in the foregoing aspects.

According to a fifteenth aspect, this application further provides a computer chip. The chip is connected to a memory. The chip is configured to read and execute a software program stored in the memory, to perform the methods in the foregoing aspects.

**BRIEF DESCRIPTION OF DRAWINGS**

FIG. 1 is a schematic diagram of displaying text information in a dotting position in the prior art;
FIG. 2 is a schematic diagram of an architecture of a network system according to this application;
FIG. 3 is a schematic diagram of a video playing method according to this application;
FIG. 4A and FIG. 4B are a schematic structural diagram of a neural network according to this application;
FIG. 5 is a schematic diagram of a video clip generation method according to this application;
FIG. 6 is a schematic diagram of another video clip generation method according to this application;
FIG. 7 is a schematic structural diagram of a server according to this application;
FIG. 8 is a schematic structural diagram of a terminal device according to this application;
FIG. 9 is a schematic structural diagram of a server according to this application;
FIG. 10 is a schematic structural diagram of a server according to this application;
FIG. 11 is a schematic structural diagram of a terminal device according to this application; and
FIG. 12 is a schematic structural diagram of a server according to this application.

**DESCRIPTION OF EMBODIMENTS**

This application provides a video playing method and an apparatus, to resolve a prior-art problem that user experience is affected because displayed text information cannot summarize video content well.

To make the objectives, technical solutions, and advantages of this application clearer, the following further describes this application in detail with reference to the accompanying drawings. A specific operation method in method embodiments may also be applied to an apparatus embodiment or a system embodiment.

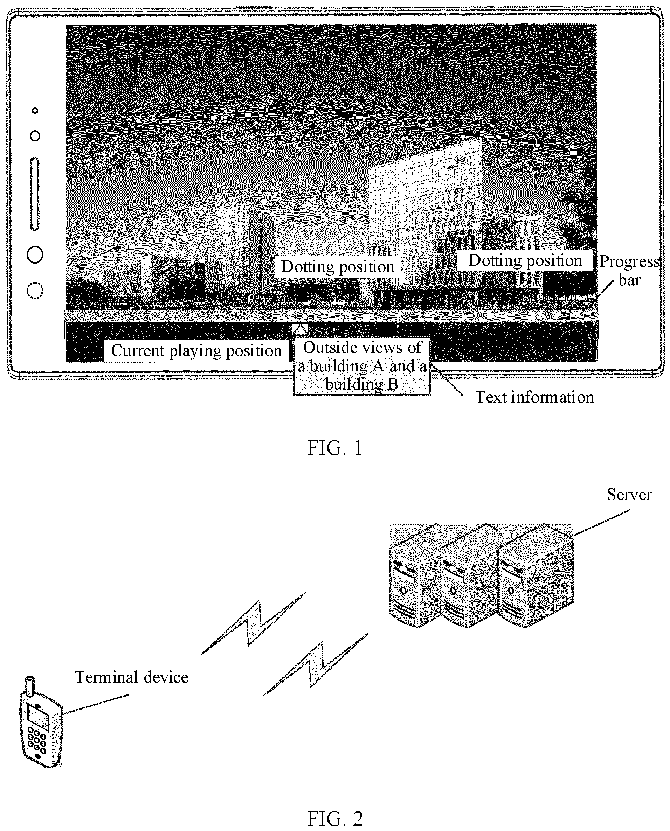

Video dotting (video dotting) is a process of describing a key frame and summarizing video content in a video. As shown in FIG. 1, in an existing video dotting solution, a terminal device usually sets one or more dotting positions on a progress bar of a video, and marks text information of video content in a dotting position. A user may move a cursor to the dotting position by moving a mouse. In this case, the text information of the video content is displayed in the dotting position. However, the text information of the video content is usually relatively concise, and cannot intuitively reflect a degree of highlighting of the video content. Consequently, the user may miss some relatively highlighting images, and user experience cannot be effectively improved.

FIG. 2 is a schematic diagram of a network architecture according to an embodiment of this application. The network architecture includes a terminal device and a server.

The server is a remote server deployed in a cloud, or may be a server that is deployed in a network and that can provide a service. The server has a video processing function and a data computation function. For example, the server may perform video segmentation, and determine a degree of highlighting of a video clip. The server may be an ultra-multi-core server, a computer on which a graphics processing unit (graphics processing unit, GPU) cluster is deployed, a large distributed computer, a cluster computer with pooled hardware resources, or the like. In this embodiment of this application, the server may generate dotting information, and send a video address and the dotting information to the terminal device after the terminal device requests the video address from the server.

The server may further segment a video, and then determine degrees of highlighting of one or more video clips obtained after the segmentation. The server may further select a plurality of relatively highlighting video clips from the video clips obtained after the segmentation, and perform video synthesis on the relatively highlighting video clips, or store the relatively highlighting video clips.

The server may store video data required by the terminal device, including source data of the video, the video clips obtained after the segmentation, the degree of highlighting of each video clip, a video obtained after the video synthesis (corresponding to a first video in the embodiments of this application), and an animated image.

The terminal device may initiate a request (corresponding to a first request and a second request in the embodiments of this application) to the server, to obtain related data (such as the video address, the dotting information, a storage address of a video clip, the video clip, the video obtained after the video synthesis, and the animated image) from the server.

After obtaining the related data, the terminal device performs an operation such as loading or display. For example, after obtaining the video address, the terminal device obtains the video based on the video address. After obtaining the dotting information, the terminal device may load a video clip in a dotting position of the video based on the dotting information. After loading the video clip, the terminal device may further play the video clip. When obtaining the video obtained after the video synthesis or the animated image, the terminal device may display the video obtained after the video synthesis or the animated image to a user.

The terminal device in this application, or referred to as user equipment (user equipment, UE), may be deployed on land, for example, an indoor or outdoor device, a handheld device, or a vehicle-mounted device. Alternatively, the terminal device may be deployed on water (for example, on a ship), or may be deployed in the air (for example, on an airplane, a balloon, or a satellite). The terminal device may be a mobile phone (mobile phone), a tablet computer (pad), a computer with a wireless receiving and sending function, a virtual reality (virtual reality, VR) device, an augmented reality (augmented reality, AR) device, a wireless device in industrial control (industrial control), a wireless device in self-driving (self driving), a wireless device in remote medical (remote medical), a wireless device in smart grid (smart grid), a wireless device in transportation safety (transportation safety), a wireless device in smart city (smart city), a wireless device in smart home (smart home), and the like.

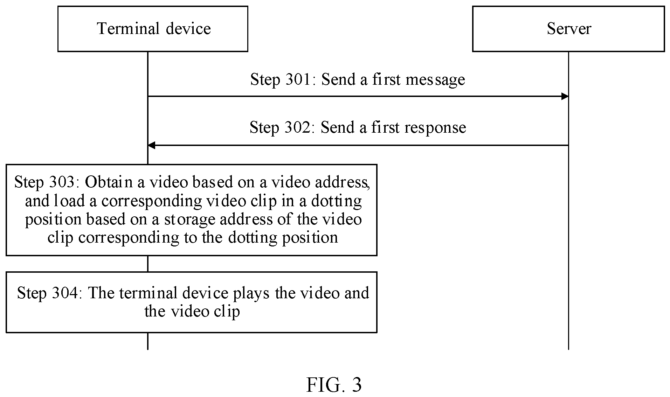

In this embodiment of this application, the server may provide, for the terminal device, an address of a to-be-played video and dotting information of the video. The dotting information includes a dotting position of the video and a storage address of a video clip corresponding to the dotting position. In this way, the terminal device can load the corresponding video clip in the dotting position of the video based on the dotting information, and play the video clip. It is clear that, compared with an existing dotting solution in which only text information is displayed, displaying the video clip in the dotting position of the video can more intuitively reflect video content, and can effectively improve user experience. Based on the network system shown in FIG. 2, an embodiment of this application provides a video playing method. As shown in FIG. 3, the method includes the following steps.

Step 301: A terminal device sends a first request to a server, where the first request is used to request an address of a video to be played by the terminal device.

When the terminal device determines to play the video, if the video is not locally stored, the terminal device may send the first request to the server to request the address of the video to be played by the terminal device. The address of the video to be played by the terminal device is requested in a plurality of manners. For example, the terminal device may use the first request to carry identification information of the video and an information element indicating to obtain the video address. The foregoing manner is merely an example, and any manner that can be used to request the address of the video to be played by the terminal device is applicable to this embodiment of this application.

Step 302: After receiving the first request from the terminal device, the server sends a first response to the terminal device, where the first response includes the video address and dotting information of the video, and the dotting information includes a dotting position of the video and a storage address of a video clip corresponding to the dotting position.

Step 303: The terminal device obtains the video based on the video address, and loads the corresponding video clip in the dotting position based on the storage address of the video clip corresponding to the dotting position.

Step 304: The terminal device plays the video and the video clip.

After receiving the first request, to send the video address and the dotting information of the video to the terminal device, the server needs to first parse the video to generate the dotting information, that is, needs to determine the dotting position of the video and the video clip corresponding to the dotting position.

In actual application, the server generates the dotting information in many manners, and this is not limited in this application. Any manner in which the generated dotting information includes the dotting position of the video and the storage address of the video clip corresponding to each dotting position is applicable to this embodiment of this application.

The following describes a manner of generating the dotting information provided in this embodiment of this application.

First, the server may segment the video into a plurality of video clips. In this embodiment of this application, a manner of segmenting the video by the server is not limited. The server may segment the video into a plurality of video clips based on a preset length. The server may alternatively segment the video into a plurality of video clips based on displayed content of the video, and the video clips display different content. For example, the server may separate, from the video, clips that display content including a specific scene or character, and synthesize the clips into a video clip. If the video includes a plurality of different scenes or characters, the video may be segmented into a plurality of video clips.

The following lists two manners in which the server segments the video into the video clips:

Manner 1: The video is segmented into a plurality of video clips with a preset length.

In this manner, the server first performs shot segmentation on the video to obtain a plurality of groups of image frames, where each group of image frames includes a plurality of consecutive image frames.

Generally, there are two types of shots in a video: an abrupt shot and a gradual shot. The abrupt shot means that a group of consecutive and associated image frames is directly switched to a next group of consecutive and associated image frames in the video without transition. The gradual shot means that a group of image frames gradually transits to a next group of image frames in the video through chromatic aberration or a spatial effect.

When performing shot segmentation on the video, the server performs video segmentation on the video based on shot types of the video. During the shot segmentation, for an abrupt shot, a point on which a group of image frames is switched to a next group of image frames in the abrupt shot is determined as a segmentation point for segmentation. A previous image frame of the segmentation point is used as an end frame of the group of image frames, and a next image frame of the segmentation point is used as a start frame of the next group of image frames. For a gradual shot, a transition interval in which a group of image frames is switched to a next group of image frames in the gradual shot is determined, a previous image frame of the transition interval is used as an end frame of the group of image frames, and a next image frame of the transition interval is used as a start frame of the next group of image frames. The server may perform shot segmentation on the video based on a difference of histogram features, for example, determine a segmentation point according to a fast shot segmentation (fast shot segmentation, FAST) algorithm to implement shot segmentation, or may perform shot segmentation by using another method, for example, by using a three-dimensional fully convolutional network (3 dimension fully convolutional networks, 3D-FCN).

When performing shot segmentation on the video, the server determines a plurality of segmentation points in the video, to further obtain a plurality of groups of image frames. Each group of image frames includes a plurality of consecutive image frames.

To distinguish between different groups of image frames, the server may obtain a frame number of a start frame (a frame number of a start image frame) and a frame number of an end frame (a frame number of an end image frame) of each group of image frames through shot segmentation, and may further determine a start timestamp and an end timestamp of each group of image frame.

In an optional implementation, after performing shot segmentation, the server may further remove a transition image of each group of image frames. The transition image includes some or all of the following image frames: an all-black image frame or an all-white image frame, an image frame that displays a blurry scene or a blurry character, and a blending frame.

The blending frame is an image frame formed when two different image frames in a video blend. For example, in a video, a previous image gradually disappears or becomes darker, a current image gradually becomes obvious or brighter, and there is an image frame in which the two images overlap. The image frame is a blending frame.

After determining the plurality of groups of image frames, the server may synthesize the plurality of groups of image frames into one or more video clips with the preset length.

For any group of image frames in the plurality of groups of image frames, the plurality of groups of image frames may be classified into three types according to a relationship between the preset length and a time length required for playing each group of image frames (a time span for playing each group of image frames). Type 1: A group of image frames with a time length greater than the preset length. To be specific, the group of image frames includes a relatively large quantity of image frames, the group of image frames may display a plurality of scenes, and the group of image frames forms a long shot. Type 2: A group of image frames with a time length less than the preset length and including a quantity of image frames that is less than a specified value. To be specific, the group of image frames includes a relatively small quantity of image frames, the group of image frames may be insufficient to present a complete scene, and the group of image frames forms a short shot. Type 3: A group of image frames with a time length equal to the preset length or having a relatively small difference from the preset length, which falls within a preset range. In this case, it may be considered that the time length of the group of image frames is approximately equal to the preset length. To be specific, a quantity of image frames included in the group of image frames ranges from the quantity of image frames included in the short shot to the quantity of image frames included in the long shot, the group of image frames may display one or more scenes, and the group of image frames forms a single shot.

In this embodiment of this application, the preset length of the video clip indicates a time length for playing the video clip, and the preset length may be set based on a specific scenario. A setting manner is not limited in this embodiment of this application.

The server may synthesize any group of image frames of one of the different types into one or more video clips with the preset length in a corresponding manner. The following describes a method for synthesizing any group of image frames of one of the different types into a video clip.

1. Any group of image frames of the type 1:

Any group of image frames of the type 1 includes a relatively large quantity of image frames, and therefore has a relatively long time length. If the time length of the group of image frames is greater than the preset length, the server may segment the group of image frames into one or more video clips with the preset length.

A start frame, an end frame, a start time, and an end time of any video clip $f_{i+m}$ obtained by segmenting an $i^{th}$ group of image frames may be determined according to the following formula:

$$f_{i+m} = \begin{cases} f_{(i+m)\_start\_frame\_number} = s_{k\_start\_frame\_number} + m * L * v_{fps} \\ f_{(i+m)\_end\_frame\_number} = s_{k\_start\_frame\_number} + (m+1) * L * v_{fps} \\ f_{(i+m)\_start\_time} = s_{k\_start\_time} + m \times L \\ f_{(i+m)\_end\_time} = s_{k\_start\_time} + (m+1) \times L \end{cases}$$

or

$$f_{i+m} = \begin{cases} f_{(i+m)\_start\_frame\_number} = s_{k\_start\_frame\_number} + m * L * v_{fps} \\ f_{(i+m)\_end\_frame\_number} = s_{k\_end\_frame\_number} + (m+1) * L * v_{fps} \\ f_{(i+m)\_start\_time} = s_{k\_start\_time} + m \times L \\ f_{(i+m)\_end\_time} = s_{k\_end\_time} + (m+1) \times L \end{cases}$$

L represents the preset length. When a video clip is obtained through synthesis, a length of the video clip may not be exactly L, and may be greater than or less than L. Therefore, $\delta$ is set to represent a length gain, and the length of the video clip ranges from $L - \delta$ to $L + \delta$. $f_i$ represents an $i^{th}$ video clip, and $s_k$ represents a $k^{th}$ group of image frames in the video. $(s_{(k+n)\_enditime} - s_{k\_start\_time}) > L + \delta$. That is, a length of the group of image frames is greater than the preset length. m = 0,1,2,... , m' - 2, m' = $INT((s_{k\_end\_time} - s_{k\_start\_time})/L)$, m' represents a quantity of video clips that can be obtained by segmenting the $i^{th}$ group of image frames, and $v_{fps}$ represents a video frame rate. $f_{(i+m)\_start\_frame\_number}$ represents a frame number of a start frame of the $(i+m)^{th}$ video clip, and $s_{k\_start\_frame\_number}$ represents a frame number of a start frame of the $k^{th}$ group of image frames in the video. $f_{(i+m)\_end\_frame\_number}$ represents a frame number of an end frame of the $(1+m)^{th}$ video clip, and $s_{k\_end\_time}$ represents an end time of frame numbers of the $k^{th}$ group of image frames in the video.

2. Any group of image frames of the type 2:

Any group of image frames of the type 2 includes a relatively small quantity of image frames, and therefore has a relatively short time length. If the time length of the group of image frames is less than the preset length, the server may synthesize a plurality of consecutive groups of image frames into one or more video clips with the preset length.

A start frame, an end frame, a start time, and an end time of any video clip $f_i$ obtained by synthesizing a plurality of groups of image frames may be determined according to the following formula:

$$f_i = \begin{cases} f_{i\_start\_frame\_number} = s_{k\_start\_frame\_number} \\ f_{i\_end\_frame\_number} = s_{(k+n)\_end\_frame\_number} \\ f_{i\_start\_time} = s_{k\_start\_time} \\ f_{i\_end\_time} = s_{(k+n)\_end\_time} \end{cases}$$

$L - \delta \leq s_{(k+n)\_end\_time} - s_{k\_start\_time} \leq L + \delta$. That is, a total time length of the plurality of consecutive groups of image frames falls within a preset range, and a difference between the total time length and the preset length is relatively small. A time length of any group of image frames in the plurality of consecutive groups of image frames is less than the preset length. $s_k$ represents a $k$th group of image frames in the video, and $s_{k+n}$ represents a $(k + n)$th group of image frames in the video. For descriptions of the parameters in the formula, refer to the foregoing descriptions. Details are not described herein again.

3. Any group of image frames of the type 3:

Because a quantity of image frames included in any group of image frames of the type 3 ranges from the quantity of image frames included in any group of image frames of the type 2 to the quantity of image frames included in any group of image frames of the type 1, a time length of the group of image frames is less than that of a long shot. If the time length of the group of image frames is equal to the preset length, or if a difference between the time length of the group of image frames and the preset length falls within an error range, and the time length of the group of image frames may be considered to be equal to the preset length, the server may synthesize the group of image frames into a video clip with the preset length.

A start frame, an end frame, a start time, and an end time of any video clip $f_i$ obtained by synthesizing a plurality of groups of image frames may be determined according to the following formula:

$$f_i = \begin{cases} f_{i\_start\_frame\_number} = s_{k\_start\_frame\_number} \\ f_{i\_end\_frame\_number} = s_{k\_end\_frame\_number} \\ f_{i\_start-time} = s_{k\_start\_time} \\ f_{i\_end-time} = s_{k\_end\_time} \end{cases}$$

$L - \delta \leq s_{k\_end\_time} - s_{k\_start\_time} \leq L + \delta$. The time length of the group of image frames may be considered to be equal to the preset length. For descriptions of the parameters in the formula, refer to the foregoing descriptions. Details are not described herein again.

Manner 2: The video is segmented into one or more video clips, where a similarity between any two adjacent frames of images in any one of the video clips falls within a preset range. That is, one of the video clips displays one type of scene or similar characters.

In this manner, the server may also perform shot segmentation on the video to obtain a plurality of groups of image frames, where each group of image frames includes a plurality of consecutive image frames. For a shot segmentation manner, refer to related descriptions of the shot segmentation in the manner 1. Details are not described herein again.

Then, for the plurality of groups of image frames obtained after the shot segmentation, image frames that display similar scenes in the groups of image frames may be synthesized into one video clip. If there are different scenes, a corresponding video clip is obtained through synthesis for each of the different scenes, and the server may synthesize the plurality of groups of image frames into a plurality of video clips.

When the video clip is obtained through synthesis, the server needs to determine whether image frames in the plurality of groups of image frames display a similar or same scene. There are many determining manners, and this is not limited in this embodiment of this application. For example, the server may first extract visual features of key frames of shots (for example, a long shot, a short shot, and a single shot), cluster shots with a close time and related semantic content to one scene according to a preset similarity determining criterion, and synthesize the shots into a corresponding video clip. The server may extract the visual features of the key frames of the shots according to the 3D-FCN, or may extract the visual features of the key frames of the shots by using a video frame color histogram method. The server may perform shot clustering by using a tree support vector machine (support vector machine, SVM).

After the server obtains the plurality of video clips through segmentation, the server may directly use a start position of each video clip in the video as a dotting position of the video. In this case, each dotting position corresponds to one video clip. The server may alternatively remove some of the plurality of video clips, and use a start position of each of the remaining video clips as a dotting position of the video. A manner of removing the some video clips by the server is not limited in this embodiment of this application. The some video clips may be randomly removed. Alternatively, a video clip that includes a relatively large quantity of transition shots with a relatively long time may be removed from the plurality of video clips. Alternatively, a video clip may be removed based on an actual application scenario.

A manner of directly determining the dotting position of the video after the plurality of video clips are obtained through segmentation is merely an example for description. Actually, the server may alternatively determine the dotting position of the video more accurately in another manner. The server may first evaluate a degree of highlighting of each video clip, in other words, may first determine the degree of highlighting of each video clip. Then, the server selects a video clip based on the degree of highlighting of each video clip, and then determines the dotting position of the video.

It should be noted that a quantity of dotting positions included in the dotting information is not limited in this embodiment of this application, and there may be one or more dotting positions.

There are many criteria for measuring a degree of highlighting of a video clip. For example, the server may measure a degree of highlighting of a video clip based on a quantity of times that the video clip is watched. A larger quantity of times that the video clip is watched indicates a higher degree of highlighting of the video clip, that is, a higher degree of highlighting. During specific implementation, the server may obtain a quantity of times that each video clip is played, and use the quantity of playing times as a degree of highlighting of the video, or may convert the quantity of playing times into a number in a 10-point system or a 100-point system according to a preset function, and use the number as a degree of highlighting of the video clip. A larger number indicates a higher degree of highlighting of the video clip. For another example, the server may alternatively measure a degree of highlighting of a video clip based on a quantity of comments (such as bullet screens) made by users on the video clip. A larger quantity of comments made by the users indicates a higher degree of highlighting of the video clip. During specific implementation, the server may obtain a quantity of comments (such as bullet screens) made by the users on each video clip, and use the quantity of comments as the degree of highlighting of the video, or may convert the quantity of comments into a number in a 10-point system or a 100-point system according to a preset function, and use the number as the degree of highlighting of the video clip. A larger number indicates a higher degree of highlighting of the video clip. For another example, a relatively highlighting clip in a movie is usually a scene in which an emotion burst of a character occurs or characters fiercely fight. An emotion burst of a character is accompanied by a pitch or frequency increase of sound of the character, and there may be some loud noise in the scene in which the characters fiercely fight. The server may determine the degree of highlighting of each video clip based on a frequency or pitch of sound in each video clip with same playing sound.

In a possible implementation, the server may alternatively determine the degree of highlighting of each video clip based on some features (for example, an image feature such as luminance, a color, and texture of each frame of image in the video clip) of each video clip. In this case, each video clip needs to be analyzed.

When analyzing each video clip, the server may determine the degree of highlighting of each video clip based on a preset neural network model.

First, the server may extract a first feature of each video clip based on the preset neural network model. The first feature includes some or all of the following: a temporal feature of a frame sequence and a spatial feature of the frame sequence.

Each video clip includes an image frame sequence. A spatial feature of each video clip corresponds to the spatial feature of the frame sequence, is appearance features, of the image frames, extracted based on the preset neural network model, and represents abundance of information such as colors, luminance, contrast, definitions, and texture of the image frames.

A temporal feature of each video clip corresponds to the temporal feature of the frame sequence, is appearance features, of a plurality of consecutive image frames, extracted based on the preset neural network model, and represents mutual association of information such as colors, luminance, contrast, definitions, and texture of the plurality of consecutive image frames, and a motion intensity of an object in the plurality of consecutive image frames.

The preset neural network model is a model that is obtained in advance by training sample data and that can output the first feature of the video clip. The sample data is a video clip that has been marked with a degree of highlighting. After the training, the first feature of the video clip can be extracted based on the preset neural network model.

Based on the preset neural network model, only the spatial feature of the video clip may be extracted, or only the temporal feature of the video clip may be extracted, or both the spatial feature and the temporal feature of the video clip may be extracted.

A quantity of network layers included in the preset neural network model and types of the network layers are not limited in this embodiment of this application. Any neural network model based on which a spatial feature of a video clip can be extracted is applicable to this embodiment of this application. The following describes a neural network model and a process of extracting the first feature based on the neural network model.

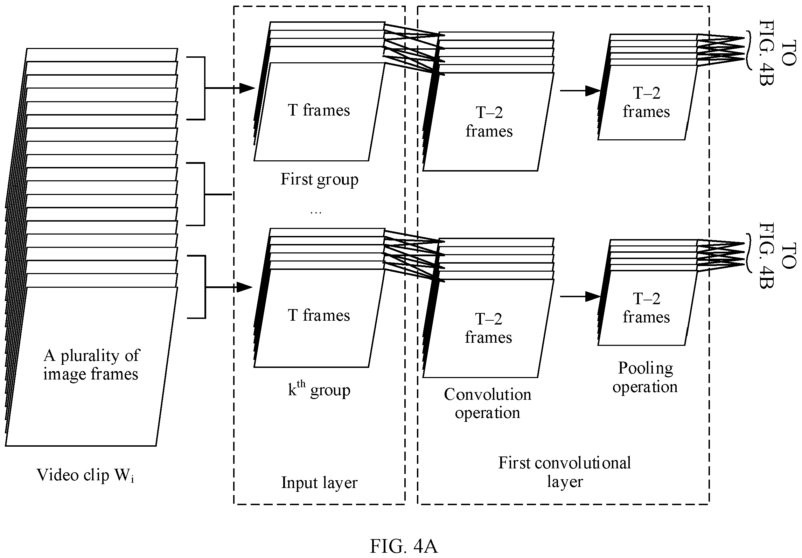

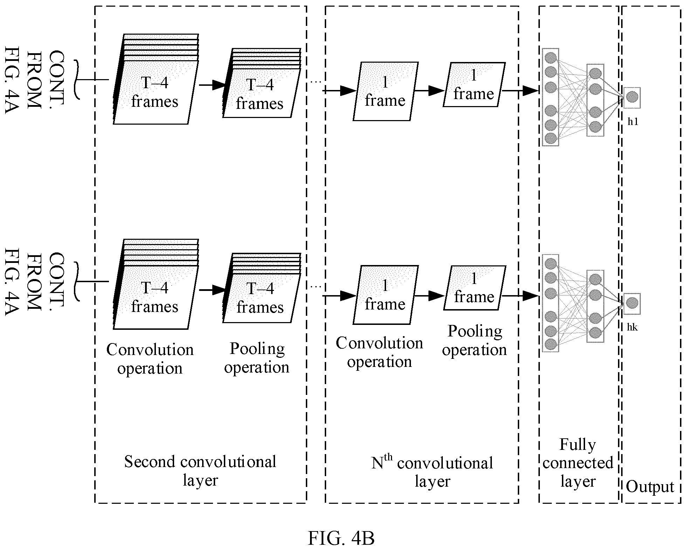

FIG. 4A and FIG. 4B show a structure of a neural network model according to an embodiment of this application. The neural network model includes an input layer, N convolutional layers (to distinguish between the convolutional layers, the convolutional layers are referred to as a first convolutional layer, a second convolutional layer, ..., and an $N^{th}$ convolutional layer in a direction from the input layer to an output layer), a fully connected layer, and the output layer.

Any video clip including a plurality of image frames is input to the input layer of the neural network model shown in FIG. 4A and FIG. 4B. The input layer classifies the plurality of image frames in the video clip into groups, and each group includes T image frames. The groups of image frames are then input to the N convolutional layers. Each convolutional layer performs a convolution operation (for example, a 3D convolution operation) and a pooling operation (for example, a max-pooling operation) on each group of image frames. Each time a convolution operation is performed, two frames are deducted from each group of image frames until one image frame is obtained after an Nth convolution layer performs a convolution operation and a pooling operation. Then, the one obtained image frame is input to the fully connected layer for processing. The fully connected layer inputs processed data to the output layer, and the output layer outputs the first feature (represented by hi in FIG. 4A and FIG. 4B) of the video clip.

The server then determines the degree of highlighting of each video clip based on the first feature of each video clip.

Generally, the first feature extracted based on the preset neural network model is a vector or data in a relatively complex form, and cannot intuitively reflect the degree of highlighting of the video clip. The server may convert the extracted first feature of the video clip into a relatively intuitive degree of highlighting of the video clip, for example, convert the first feature of the video clip into the degree of highlighting according to a preset function. A representation manner of the function is not limited in this embodiment of this application, and any function that can convert the first feature of the video clip into the degree of highlighting is applicable to this embodiment of this application.

In a possible implementation, the server may convert the first feature according to a softmax function:

$$H_i = \frac{e^{\|w_i\|}}{\sum_i^N e^{\|w_i\|}}$$

$H_i$ represents a degree of highlighting of the ith video clip, $H_i \in (0,1)$, $H_i$ closer to 1 indicates a higher degree of highlighting of the video clip, $w_i$ represents a first feature of the ith video clip, and N represents a total quantity of video clips.

The preset neural network model may alternatively have both a function of extracting the first feature of the video clip and a function of converting the first feature of the video clip into the degree of highlighting, so that the preset neural network model can directly output the degree of highlighting of the video clip.

The server measures a degree of highlighting of a video clip and determines the degree of highlighting of the video clip by using many methods. The foregoing manner is merely an example for description. Any manner in which a degree of highlighting of a video clip can be determined is applicable to this embodiment of this application.

After determining the degree of highlighting of each video clip, the server may select N video clips based on the degree of highlighting of each video clip. For example, the server may select the first N video clips sorted in descending order of degrees of highlighting, or may set a preset range of degrees of highlighting, and select N video clips whose degrees of highlighting fall within the preset range.

After selecting the N video clips, the server determines N dotting positions of the video based on positions of the N video clips in the video, where one of the dotting positions corresponds to one of the N video clips.

After determining the dotting position and the video clip corresponding to each dotting position, the server may locally store information about the dotting position and the corresponding video clip, or may store information about the dotting position and the corresponding video clip in another server.

The information about the dotting position is information that can identify the dotting position, and includes some or all of the following information:
an identifier of the dotting position and a position of the dotting position on a progress bar of the video.

When there is more than one dotting position in the video, to distinguish between different dotting positions, identifiers may be set for the dotting positions. For example, the dotting positions may be numbered, or may be distinguished between each other by letters. That is, the identifier of the dotting position may be a number or a letter, or may be a specific time point. Any manner in which different dotting positions can be identified is applicable to this embodiment of this application.

For any video clip, the server may determine a dotting position of the video based on a position of the video clip in the video, and the server may use a start position of the video clip in the video as the dotting position. In this case, a position of the video clip on the progress bar of the video is the dotting position of the video, and there is a correspondence between the dotting position and the video clip.

The video clip that corresponds to the dotting position and that is stored in the server may contain audio, or may not contain audio, for example, may be an animated image.

After the terminal device sends the first request to the server, the server may send, to the terminal device, the first response that carries the dotting information.

The first response further includes the video address, and the video address is a storage address of the video.

In this embodiment of this application, to enable transmitted information to occupy fewer resources, the server uses the first response to carry only the video address and the dotting information of the video. When the terminal device is to display the video or the video clip, the terminal device may obtain the video or the video clip based on the video address or the dotting information of the video.

Optionally, to play the video or the video clip more flexibly, the terminal device may alternatively send a request for the video to the server. The server may feed back a response message that carries the video, the dotting position of the video, and the video clip corresponding to the dotting position of the video. After receiving the response message, the terminal device may flexibly select a time and a manner for displaying the video and the video clip.

After receiving the first response, to obtain the video, the terminal device may send a request for obtaining the video to the server or a device that stores the video. The request may carry the video address.

After obtaining the video, the terminal device may preload the video clip corresponding to each dotting position, or may preload video clips corresponding to some dotting positions. For example, the terminal device may load only a video clip corresponding to a dotting position that is sorted in a former part (a former playing position) of the progress bar. When the terminal device plays the video to a latter position on the progress bar, the terminal device loads a video clip corresponding to a remaining dotting position.

In a possible implementation, the terminal device may alternatively play the video while loading the corresponding video clip in the dotting position. For example, when playing the video, the terminal device may load video clips corresponding to at least one or more dotting positions closest to a current playing position. Alternatively, when playing the video, the terminal device may load a corresponding video clip in each dotting position based on the dotting position on the progress bar.

That the terminal device loads the corresponding video clip in the dotting position based on the storage address of the video clip corresponding to the dotting position may specifically include: The terminal device first sends a second request to the server, where the second request is used to request the video clip corresponding to the dotting position, the second request includes the storage address of the video clip corresponding to the dotting position. Then, the terminal device receives the video clip returned by the server.

In a possible implementation, the second request may include an identifier of the video clip corresponding to the dotting position, so that the server obtains the corresponding video clip based on the identifier and returns the video clip to the terminal device.

Specifically, when the terminal device loads only video clips corresponding to some dotting positions of the video, the second request may be used to request the video clips corresponding to the some dotting positions of the video, and the second request includes storage addresses of the video clips corresponding to the some dotting positions of the video. When the terminal device needs to load the video clips corresponding to all the dotting positions of the video, the second request is used to request the video clips corresponding to all the dotting positions of the video, and the second request includes storage addresses of the video clips corresponding to all the dotting positions of the video.

After receiving the second request, the server obtains, based on the second request, that is, based on the storage address of the video clip corresponding to the dotting position, the video clip corresponding to the dotting position, uses a second response to carry the video clip corresponding to the dotting position, and sends the second response to the terminal device. After receiving the second response sent by the server, the terminal device may play the corresponding video clip.

When the terminal device plays the video and the video clip, there may be specifically the following two cases:

Case 1: When playing the video, the terminal device actively plays a video clip corresponding to at least one dotting position closest to the current playing position.
The terminal device displays a small window in the least one dotting position closest to the current playing position, and plays a corresponding video clip. Alternatively, split-screen display may be performed in a display interface of the video. To be specific, the display interface of the video is divided into two parts. One part is used to play the current video, and the other part is used to play the video clip corresponding to the at least one dotting position closest to the current playing position.
Case 2: The terminal device plays, after receiving a trigger operation in the dotting position, the video clip corresponding to the dotting position.

The trigger operation in the dotting position may be detecting that a cursor stays in the dotting position, or may be detecting a single tap operation or a double tap operation performed by the user in the dotting position by using a mouse, or may be detecting that the user taps the screen in the dotting position.

After receiving the triggering operation in the dotting position, the terminal device may display a small window in the dotting position, and play a corresponding video clip.

It should be noted that, when playing the video and the video clip, the terminal device may play the video and the video clip at the same time. For example, in the case 1, the terminal device may play the video in a large window, and play the video clip in a small window. In order not to affect user experience, when playing the video clip, the terminal device may play only an image of the video clip, but do not play sound. Alternatively, the terminal device may pause playing the video, and play only the video clip. For example, in the case 2, after receiving the trigger operation in the dotting position, the terminal device may pause playing the video, and display a small window in the dotting position, to play the video clip (play both an image and sound) corresponding to the dotting position.

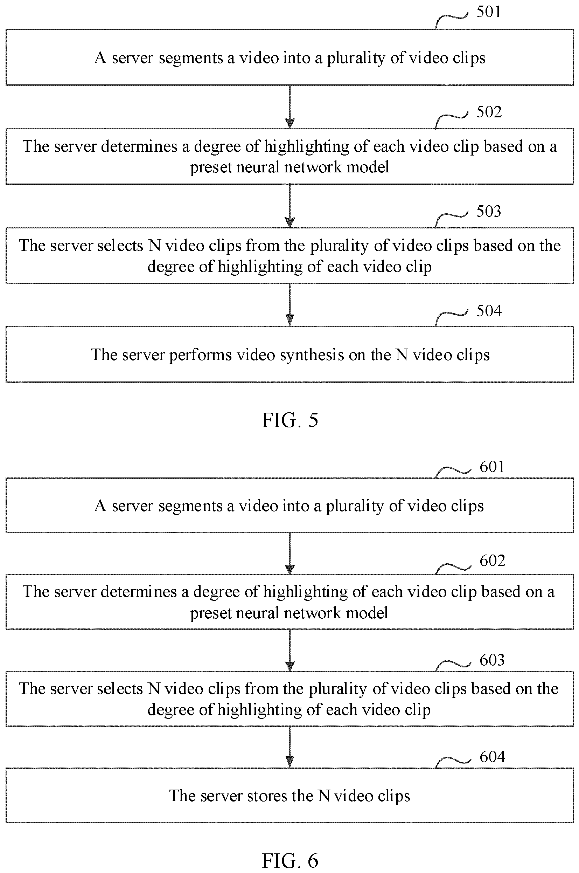

As shown in FIG. 5, an embodiment of this application further provides a video clip generation method. The method includes the following steps.

Step 501: A server segments a video into a plurality of video clips.

Step 502: The server determines a degree of highlighting of each video clip based on a preset neural network model.

For a manner in which the server segments the video and determines the degree of highlighting of each video clip, refer to related descriptions in the embodiment shown in FIG. 4A and FIG. 4B. Details are not described herein again.

Step 503: The server selects N video clips from the plurality of video clips based on the degree of highlighting of each video clip.

The server selects the N video clips in many manners. For example, the server may select the first N video clips sorted in descending order of degrees of highlighting, or may set a preset range of degrees of highlighting, and select N video clips whose degrees of highlighting fall within the preset range.

Step 504: The server performs video synthesis on the N video clips.

After selecting the N video clips, the server may synthesize the N video clips into one video (for ease of description, a first video is used to represent the video obtained after the video synthesis). After performing video synthesis, the server may store the video obtained after the video synthesis, for example, may locally store the first video, or may store the first video in another server.

Then, the terminal device may send a request for an address of the first video to the server, and the server may send the address of the first video to the terminal device.

When the terminal device determines that the first video is required, for example, after the terminal device determines to display the first video, the terminal device sends, to the server, a request that carries the address of the first video. After receiving the request, the server sends the first video to the terminal device.

In a possible implementation, after performing video synthesis on the N video clips, the server may directly send the first video to the terminal device. Interaction between the server and the terminal device for obtaining the address of the first video may alternatively be omitted. Instead, the terminal device directly sends a request for the first video to the server, and the server directly sends the first video to the terminal device.

As shown in FIG. 6, an embodiment of this application further provides a video clip generation method. The method includes the following steps.

Step 601: A server segments a video into a plurality of video clips.

Step 602: The server determines a degree of highlighting of each video clip based on a preset neural network model.

Step 603: The server selects N video clips from the plurality of video clips based on the degree of highlighting of each video clip.

For a manner in which the server segments the video and determines the degree of highlighting of each video clip, and a step of selecting a video clip, refer to related descriptions in the embodiment shown in FIG. 5. Details are not described herein again.

Step 604: The server stores the N video clips.

The N video clips stored in the server may contain audio, or may not contain audio, for example, may be animated images.

After storing the N video clips, the server may send the N video clips to the terminal device. The server may directly send the N video clips, or may send the N video clips after receiving a request from the terminal device. The following provides a description by using an example in which the N video clips stored in the server are N animated images.

The terminal device may send a request for addresses of the animated images to the server, and the server may send the addresses of the animated images to the terminal device.

When the terminal device determines that the animated images are required, for example, after the terminal device determines to display the animated images, the terminal device sends, to the server, a request that carries the addresses of the animated images. After receiving the request, the server sends the animated images to the terminal device.

In a possible implementation, the server may directly send the animated images to the terminal device. Interaction between the server and the terminal device for obtaining the addresses of the animated images may alternatively be omitted. The terminal device directly sends a request for the animated images to the server, and the server directly sends the animated images to the terminal device.

It should be noted that, during interaction between the terminal device and the server, only some of the N animated images may be obtained, or all of the N animated images may be obtained. This is not limited in this embodiment of this application.

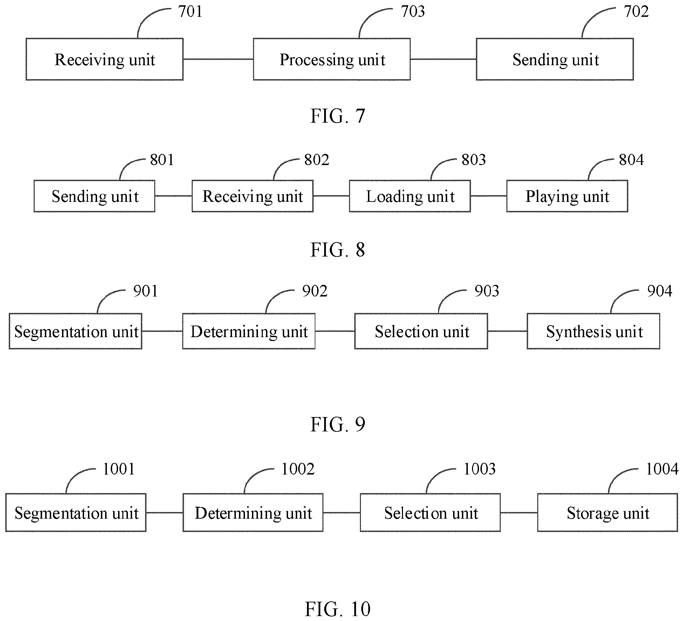

Based on a same inventive concept as the method embodiments, an embodiment of the present invention provides a server. The server is specifically configured to implement the method performed by the server in the method embodiment shown in FIG. 3. A structure of the server is in shown in FIG. 7, and includes a receiving unit 701 and a sending unit 702.

The receiving unit 701 is configured to receive a first request from a terminal device, where the first request is used to request an address of a video to be played by the terminal device.

The sending unit 702 is configured to send a first response to the terminal device, where the first response includes the video address and dotting information of the video, and the dotting information includes a dotting position of the video and a storage address of a video clip corresponding to the dotting position.

In a possible implementation, the server may further send the video clip to the terminal device.

Specifically, the server 700 further includes a processing unit 703. The receiving unit 701 receives a second request sent by the terminal device, where the second request is used to request the video clip corresponding to the dotting position, and the second request includes the storage address of the video clip corresponding to the dotting position. After the receiving unit 701 receives the second request, the processing unit 703 obtains, based on the storage address of the video clip corresponding to the dotting position, the video clip corresponding to the dotting position, and then the sending unit 702 may send a second response to the terminal device. The second response includes the video clip corresponding to the dotting position.

To send the dotting information to the terminal device, before the sending unit 702 sends the first response to the terminal device, the processing unit 703 may be configured to determine the dotting position and the video clip corresponding to the dotting position. Specifically, the processing unit 703 first segments the video into a plurality of video clips, determines a degree of highlighting of each video clip based on a preset neural network model, and selects N video clips based on the degree of highlighting of each video clip. After selecting the N video clips, the processing unit 703 may determine N dotting positions of the video based on positions of the N video clips in the video, where one of the dotting position corresponds to one of the N video clips.

In a possible implementation, in a process in which the processing unit 703 determines the degree of highlighting of each video clip based on the preset neural network model, the processing unit 703 may extract a first feature of each video clip based on the preset neural network model. The first feature includes some or all of the following: a temporal feature of a frame sequence and a spatial feature of the frame sequence. Then, the processing unit 703 determines the degree of highlighting of each video clip based on the first feature of each video clip.

The processing unit 703 segments the video into the plurality of video clips in many manners, and two of the manners are listed below:

Manner 1: Lengths of video clips obtained through segmentation are the same, and are a preset length.
The processing unit 703 first performs shot segmentation on the video based on shot types of the video, to obtain a plurality of groups of image frames, where each group of image frames includes a plurality of consecutive image frames; and then synthesizes the plurality of groups of image frames into one or more video clips with the preset length.
Manner 2: A video clip obtained through segmentation displays a specific scene or a specific character.

The processing unit 703 first performs shot segmentation on the video to obtain a plurality of groups of image frames, where each group of image frames includes a plurality of consecutive image frames; and then synthesizes the plurality of groups of image frames into one or more video clips, where a similarity between any two adjacent frames of images in one video clip falls within a preset range.

Based on a same inventive concept as the method embodiments, an embodiment of the present invention provides a terminal device. The terminal device is specifically configured to implement the method performed by the terminal device in the method embodiment shown in FIG. 3. A structure of the terminal device is shown in FIG. 8, and includes a sending unit 801, a receiving unit 802, a loading unit 803, and a playing unit 804.

The sending unit 801 is configured to send a first request to a server, where the first request is used to request an address of a video to be played by the terminal device.

The receiving unit 802 is configured to receive a first response sent by the server, where the first response includes the video address and dotting information of the video, and the dotting information includes a dotting position of the video and a storage address of a video clip corresponding to the dotting position.

The loading unit 803 is configured to: obtain the video based on the video address, and load the corresponding video clip in the dotting position based on the storage address of the video clip corresponding to the dotting position.

The playing unit 804 is configured to play the video and the video clip.

When the loading unit 803 loads the corresponding video clip in the dotting position based on the storage address of the video clip corresponding to the dotting position, the terminal device may interact with the server. Specifically, the sending unit 801 first sends a second request to the server, where the second request is used to request the video clip corresponding to the dotting position, and the second request includes the storage address of the video clip corresponding to the dotting position. Then, the receiving unit 802 receives a second response sent by the server, where the second response includes the video clip corresponding to the dotting position. After the second response is received, the loading unit 803 loads the corresponding video clip in the dotting position based on the second response.

In a possible implementation, when playing the video clip, the playing unit 804 may display a video clip corresponding to at least one dotting position closest to a current playing position.

In another possible implementation, when playing the video clip, the playing unit 804 may play, after a trigger operation in the dotting position is received, the video clip corresponding to the dotting position.

Based on a same inventive concept as the method embodiments, an embodiment of the present invention provides a server. The server is specifically configured to implement the method performed by the server in the method embodiment shown in FIG. 5. A structure of the server is shown in FIG. 9, and includes a segmentation unit 901, a determining unit 902, a selection unit 903, and a synthesis unit 904.

The segmentation unit 901 is configured to segment a video into a plurality of video clips.

The determining unit 902 is configured to determine a degree of highlighting of each video clip based on a preset neural network model.

The selection unit 903 is configured to select N video clips from the plurality of video clips based on the degree of highlighting of each video clip.

The synthesis unit 904 is configured to perform video synthesis on the N video clips.

Optionally, the server may further include a storage unit, and the storage unit is configured to store a video obtained after the video synthesis.

Based on a same inventive concept as the method embodiments, an embodiment of the present invention provides a server. The server is specifically configured to implement the method performed by the server in the method embodiment shown in FIG. 6. A structure of the server is shown in FIG. 10, and includes a segmentation unit 1001, a determining unit 1002, a selection unit 1003, and a storage unit 1004.

The segmentation unit 1001 is configured to segment a video into a plurality of video clips.

The determining unit 1002 is configured to determine a degree of highlighting of each video clip based on a preset neural network model.

The determining unit 1003 is configured to select N video clips from the plurality of video clips based on the degree of highlighting of each video clip.

The storage unit 1004 is configured to store the N video clips.

Division into the units in this embodiment of this application is an example and is merely logical function division. In actual implementation, another division manner may be used. In addition, function units in this embodiment of this application may be integrated in one processor, or may exist alone physically, or two or more units may be integrated into one module. The integrated unit may be implemented in the form of hardware, or may be implemented in the form of a software function module.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The software product is stored in a storage medium and includes several instructions for instructing a terminal device (which may be a personal computer, a mobile phone, a network device, or the like) or a processor (processor) to perform all or some of the steps of the methods in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

In the embodiments of this application, both the server and the terminal device may be divided into function modules through integration. The "module" herein may be a specific ASIC, a circuit, a processor executing one or more software or firmware programs, a memory, an integrated logic circuit, and/or another device that can provide the foregoing functions.

In a simple embodiment, a person skilled in the art may figure out that the terminal device may be in a form shown in FIG. 8.

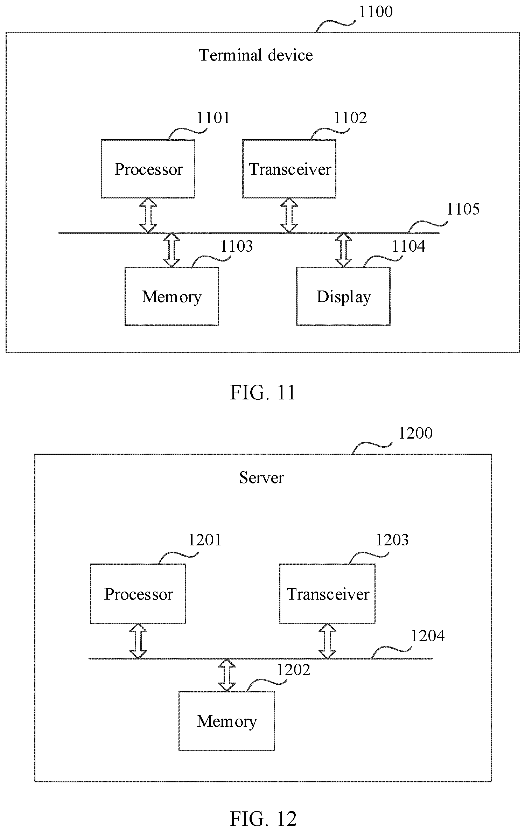

The terminal device 1100 shown in FIG. 11 includes at least one processor 1101, and optionally, may further include a transceiver 1102 and a memory 1103.

In a possible implementation, the terminal device 1100 may further include a display 1104.

The memory 1103 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 1103 is any other medium that can be used to carry or store expected program code in a command or data structure form and that can be accessed by a computer. However, this is not limited. The memory 1103 may be a combination of the foregoing memories.

In this embodiment of this application, a specific connection medium between the processor 1101 and the memory 1103 is not limited. In this embodiment of this application, the memory 1103 and the processor 1101 are connected through a bus 1105 in the figure. The bus 1105 is indicated by using a bold line in the figure. A manner of connection between other components is merely an example for description, and is not limited thereto. The bus 1105 may be classified into an address bus, a data bus, a control bus, or the like. For ease of representation, only one bold line is used to represent the bus in FIG. 11, but this does not mean that there is only one bus or only one type of bus.

The processor 1101 may have data receiving and sending functions, and can communicate with another device. For example, in this embodiment of this application, the processor 1101 may send a first request or a second request to a server, or may receive a first response or a second response from the server. In the apparatus shown in FIG. 11, an independent data transceiver module may be disposed. For example, the transceiver 1102 is configured to receive and send data. When communicating with another device, the processor 1101 may transmit data through the transceiver 1102. For example, in this embodiment of this application, the processor 1101 may send the first request or the second request to the server through the transceiver 1102, or may receive the first response or the second response from the server through the transceiver 1102.

When the terminal device is in a form shown in FIG. 11, the processor 1101 in FIG. 11 may invoke a computer executable instruction stored in the memory 1103, so that the terminal device can perform the method performed by the terminal device in any one of the foregoing method embodiments.

Specifically, the memory 1103 stores a computer executable instruction used to implement functions of the sending unit, the receiving unit, the loading unit, and the display unit in FIG. 8. All functions/implementation processes of the sending unit, the receiving unit, the loading unit, and the playing unit in FIG. 8 may be implemented by the processor 1101 in FIG. 11 by invoking the computer executable instruction stored in the memory 1103.

Alternatively, the memory 1103 stores a computer executable instruction used to implement functions of the loading unit and the playing unit in FIG. 8. Functions/implementation processes of the loading unit and the playing unit in FIG. 8 may be implemented by the processor 1101 in FIG. 11 by invoking the computer executable instruction stored in the memory 1103. Functions/implementation processes of the sending unit and the receiving unit in FIG. 8 may be implemented by the transceiver 1102 in FIG. 11.

In addition to the computer executable instruction, the memory 1103 may be further configured to store video data or dotting information required by the sending unit, the receiving unit, the loading unit, and the playing unit in FIG. 8. For example, the memory 1103 may store the video address, the video clip, the video, or the dotting information of the video.

When the processor 1101 performs a function of the playing unit, if the processor 1101 performs an operation of playing a video or a video clip, the processor 1101 may display the played video or video clip by using the display 1104 in the terminal device.

Optionally, when performing a function of the display unit, the processor 1101 may alternatively display a video or a video clip by using a display in another device, for example, send a play instruction to the another device to indicate a video or a video clip.

In a simple embodiment, a person skilled in the art may figure out that the server may be in a form shown in FIG. 12.

A server 1200 shown in FIG. 12 includes at least one processor 1201, and optionally, may further include a memory 1202 and a transceiver 1203.

The memory 1202 may be a volatile memory such as a random access memory. Alternatively, the memory may be a non-volatile memory such as a read-only memory, a flash memory, a hard disk drive, or a solid-state drive. Alternatively, the memory 1202 is any other medium that can be used to carry or store expected program code in a command or data structure form and that can be accessed by a computer. However, this is not limited. The memory 1202 may be a combination of the foregoing memories.

In this embodiment of this application, a specific connection medium between the processor 1201 and the memory 1202 is not limited. In this embodiment of this application, the memory 1202 and the processor 1201 are connected through a bus 1204 in the figure. The bus 1204 is indicated by using a bold line in the figure. A manner of connection between other components is merely an example for description, and is not limited thereto. The bus 1204 may be classified into an address bus, a data bus, a control bus, or the like. For ease of representation, only one bold line is used to represent the bus in FIG. 12, but this does not mean that there is only one bus or only one type of bus.

The processor 1201 may have data receiving and sending functions, and can communicate with another device. In the apparatus shown in FIG. 12, an independent data transceiver module may alternatively be disposed. For example, the transceiver 1203 is configured to receive and send data. When the processor 1201 communicates with another device, data may be transmitted through the Transceiver 1203.

When the server is in a form shown in FIG. 12, the processor 1201 in FIG. 12 may invoke a computer executable instruction stored in the memory 1202, so that the server can perform the method performed by the server in any one of the foregoing method embodiments.

Specifically, the memory 1202 stores a computer executable instruction used to implement functions of the sending unit, the receiving unit, and the processing unit in FIG. 7. All functions/implementation processes of the sending unit, the receiving unit, and the processing unit 703 in FIG. 7 may be implemented by the processor 1201 in FIG. 12 by invoking the computer executable instruction stored in the memory 1202. Alternatively, the memory 1202 stores a computer executable instruction used to implement a function of the processing unit 703 in FIG. 7. A function/implementation process of the processing unit 703 in FIG. 7 may be implemented by the processor 1201 in FIG. 12 by invoking the computer executable instruction stored in the memory 1202. Functions/implementation processes of the sending unit and the receiving unit in FIG. 7 may be implemented by the transceiver 1203 in FIG. 12.

In addition to the computer executable instruction, the memory 1202 may be further configured to store video data or dotting information required by the sending unit, the receiving unit, and the processing unit in FIG. 7. For example, the memory 1202 may store the video address, the video clip, the video, or the dotting information of the video.

Specifically, the memory 1202 stores a computer executable instruction used to implement functions of the segmentation unit, the determining unit, the selection unit, and the synthesis unit in FIG. 9, and functions/implementation processes of the segmentation unit, the determining unit, the selection unit, and the synthesis unit in FIG. 9 may be implemented by the processor 1201 in FIG. 12 by invoking the computer executable instruction stored in the memory 1202. Optionally, the processor 1201 may further send the first video to another device through the transceiver 1203.

In addition to the computer executable instruction, the memory 1202 may be further configured to store video data required by the segmentation unit, the determining unit, the selection unit, and the synthesis unit in FIG. 9. For example, the memory 1202 may store the video clip, the video, and the first video.

Specifically, the memory 1202 stores a computer executable instruction used to implement functions of the segmentation unit, the determining unit, the selection unit, and the storage unit in FIG. 10, and functions/implementation processes of the segmentation unit, the determining unit, the selection unit, and the storage unit in FIG. 10 may be implemented by the processor 1201 in FIG. 12 by invoking the computer executable instruction stored in the memory 1202. Optionally, the processor 1201 may further send the stored video clip to another device through the transceiver 1203.

In addition to the computer executable instruction, the memory 1202 may be further configured to store video data required by the segmentation unit, the determining unit, the selection unit, and the storage unit in FIG. 10. For example, the memory 1202 may store the video clip, the video, and the animated image.

A person skilled in the art should understand that the embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of the any other programmable data processing device generate an apparatus for implementing a specific function in one or more processes in the flowcharts and/or in one or more blocks in the block diagrams.

These computer program instructions may alternatively be stored in a computer readable memory that can instruct the computer or the another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope defined by the following claims and their equivalent technologies.

**Claims**

1. A video playing method, wherein the method comprises:

   receiving, by a server, a first request from a terminal device, wherein the first request is used to request an address of a video to be played by the terminal device; and

   sending, by the server, a first response to the terminal device, wherein the first response comprises the video address and dotting information of the video, and the dotting information comprises a dotting position of the video and a storage address of a video clip corresponding to the dotting position.

2. The method according to claim 1, wherein after the sending, by the server, a first response to the terminal device, the method further comprises:

   receiving, by the server, a second request sent by the terminal device, wherein the second request is used to request the video clip corresponding to the dotting position, and the second request comprises the storage address of the video clip corresponding to the dotting position;

   obtaining, by the server based on the storage address of the video clip corresponding to the dotting position, the video clip corresponding to the dotting position; and

   sending, by the server, a second response to the terminal device, wherein the second response comprises the video clip corresponding to the dotting position.

3. The method according to claim 1, wherein before the sending, by the server, a first response to the terminal device, the method further comprises:

   segmenting, by the server, the video into a plurality of video clips;

   determining, by the server, a degree of highlighting of each video clip based on a preset neural network model;

   selecting, by the server, N video clips based on the degree of highlighting of each video clip; and

   determining, by the server, N dotting positions of the video based on positions of the N video clips in the video, wherein one of the dotting positions corresponds to one of the N video clips.

4. The method according to claim 3, wherein the determining, by the server, a degree of highlighting of each video clip based on a preset neural network model comprises:

   extracting, by the server, a first feature of each video clip based on the preset neural network model, wherein the first feature comprises some or all of the following: a temporal feature of a frame sequence and a spatial feature of the frame sequence; and

   determining, by the server, the degree of highlighting of each video clip based on the first feature of each video clip.

5. The method according to claim 3, wherein the segmenting, by the server, the video into a plurality of video clips comprises:

   performing, by the server, shot segmentation on the video to obtain a plurality of groups of image frames, wherein each group of image frames comprises a plurality of consecutive image frames; and

   synthesizing, by the server, the plurality of groups of image frames into one or more video clips with a preset length.

6. The method according to claim 3, wherein the segmenting, by the server, the video into a plurality of video clips comprises:

   performing, by the server, shot segmentation on the video based on shot types of the video, to obtain a plurality of groups of image frames, wherein each group of image frames comprises a plurality of consecutive image frames; and

   synthesizing, by the server, the plurality of groups of image frames into one or more video clips, wherein a similarity between any two adjacent frames of images in one video clip falls within a preset range.

7. A video playing method, wherein the method comprises:

   after sending a first request to a server, receiving, by a terminal device, a first response sent by the server, wherein the first request is used to request an address of a video to be played by the terminal device, the first response comprises the video address and dotting information of the video, and the dotting information comprises a dotting position of the video and a storage address of a video clip corresponding to the dotting position; obtaining, by the terminal device, the video based on the video address, and loading the corresponding video clip in the dotting position based on the storage address of the video clip corresponding to the dotting position; and playing, by the terminal device, the video and the video clip.

8. The method according to claim 7, wherein the loading, by the terminal device, the corresponding video clip in the dotting position based on the storage address of the video clip corresponding to the dotting position comprises:

sending, by the terminal device, a second request to the server, wherein the second request is used to request the video clip corresponding to the dotting position, and the second request comprises the storage address of the video clip corresponding to the dotting position; and
receiving, by the terminal device, a second response sent by the server, wherein the second response comprises the video clip corresponding to the dotting position.

9. The method according to claim 7 or 8, wherein the playing, by the terminal device, the video clip comprises:
when playing the video, displaying, by the terminal device, a video clip corresponding to at least one dotting position closest to a current playing position.

10. The method according to claim 7 or 8, wherein the playing, by the terminal device, the video clip comprises:
playing, by the terminal device after receiving a trigger operation in the dotting position, the video clip corresponding to the dotting position.

11. A server, wherein the apparatus comprises a receiving unit and a sending unit;

the receiving unit is configured to receive a first request from a terminal device, wherein the first request is used to request an address of a video to be played by the terminal device; and
the sending unit is configured to send a first response to the terminal device, wherein the first response comprises the video address and dotting information of the video, and the dotting information comprises a dotting position of the video and a storage address of a video clip corresponding to the dotting position.

12. The server according to claim 11, wherein the server further comprises a processing unit;

the receiving unit is further configured to receive a second request sent by the terminal device, wherein the second request is used to request the video clip corresponding to the dotting position, and the second request comprises the storage address of the video clip corresponding to the dotting position;
the processing unit is configured to obtain, based on the storage address of the video clip corresponding to the dotting position, the video clip corresponding to the dotting position; and
the sending unit is further configured to send a second response to the terminal device, wherein the second response comprises the video clip corresponding to the dotting position.

13. The server according to claim 11, wherein the server further comprises a processing unit, and before the sending unit sends the first response to the terminal device, the processing unit is configured to:

segment the video into a plurality of video clips;
determine a degree of highlighting of each video clip based on a preset neural network model;
select N video clips based on the degree of highlighting of each video clip; and
determine N dotting positions of the video based on positions of the N video clips in the video, wherein one of the dotting positions corresponds to one of the N video clips.

14. The server according to claim 13, wherein when determining the degree of highlighting of each video clip based on the preset neural network model, the processing unit is specifically configured to:

extract a first feature of each video clip based on the preset neural network model, wherein the first feature comprises some or all of the following: a temporal feature of a frame sequence and a spatial feature of the frame sequence; and
determine the degree of highlighting of each video clip based on the first feature of each video clip.

15. The server according to claim 13, wherein when segmenting the video into the plurality of video clips, the processing unit is specifically configured to:

perform shot segmentation on the video based on shot types of the video, to obtain a plurality of groups of image frames, wherein each group of image frames comprises a plurality of consecutive image frames; and synthesize the plurality of groups of image frames into one or more video clips with a preset length.

16. The server according to claim 13, wherein when segmenting the video into the plurality of video clips, the processing unit is specifically configured to:

perform shot segmentation on the video to obtain a plurality of groups of image frames, wherein each group of image frames comprises a plurality of consecutive image frames; and synthesize the plurality of groups of image frames into one or more video clips, wherein a similarity between any two adjacent frames of images in one video clip falls within a preset range.

17. A terminal device, wherein the apparatus comprises a sending unit, a receiving unit, a loading unit, and a playing unit;

the sending unit is configured to send a first request to a server; the receiving unit is configured to receive a first response sent by the server, wherein the first request is used to request an address of a video to be played by the terminal device, the first response comprises the video address and dotting information of the video, and the dotting information comprises a dotting position of the video and a storage address of a video clip corresponding to the dotting position; the loading unit is configured to: obtain the video based on the video address, and load the corresponding video clip in the dotting position based on the storage address of the video clip corresponding to the dotting position; and the playing unit is configured to play the video and the video clip.

18. The terminal device according to claim 17, wherein when the loading unit loads the corresponding video clip in the dotting position based on the storage address of the video clip corresponding to the dotting position,

the sending unit is configured to send a second request to the server, wherein the second request is used to request the video clip corresponding to the dotting position, and the second request comprises the storage address of the video clip corresponding to the dotting position; the receiving unit is configured to receive a second response sent by the server, wherein the second response comprises the video clip corresponding to the dotting position; and the loading unit is configured to load the corresponding video clip in the dotting position based on the second response.

19. The terminal device according to claim 17 or 18, wherein when playing the video clip, the playing unit is specifically configured to:
when playing the video, display a video clip corresponding to at least one dotting position closest to a current playing position.

20. The terminal device according to claim 17 or 18, wherein when playing the video clip, the playing unit is specifically configured to:
play, after a trigger operation in the dotting position is received, the video clip corresponding to the dotting position.

FIG. 1

FIG. 2

| Terminal device | | Server |
| --- | --- | --- |

Step 301: Send a first message

Step 302: Send a first response

Step 303: Obtain a video based on a video address, and load a corresponding video clip in a dotting position based on a storage address of the video clip corresponding to the dotting position

Step 304: The terminal device plays the video and the video clip

FIG. 3

FIG. 4A

**Second convolutional layer**

CONT. FROM FIG. 4A — T–4 frames → Convolution operation → T–4 frames → Pooling operation

CONT. FROM FIG. 4A — T–4 frames → Convolution operation → T–4 frames → Pooling operation

**N$^{th}$ convolutional layer**

1 frame → Convolution operation → 1 frame → Pooling operation

1 frame → Convolution operation → 1 frame → Pooling operation

**Fully connected layer**

h1

hk

**Output**

FIG. 4B

~ 501

A server segments a video into a plurality of video clips

~ 502

The server determines a degree of highlighting of each video clip based on a preset neural network model

~ 503

The server selects N video clips from the plurality of video clips based on the degree of highlighting of each video clip

~ 504

The server performs video synthesis on the N video clips

FIG. 5

~ 601

A server segments a video into a plurality of video clips

~ 602

The server determines a degree of highlighting of each video clip based on a preset neural network model

~ 603

The server selects N video clips from the plurality of video clips based on the degree of highlighting of each video clip

~ 604

The server stores the N video clips

FIG. 6

701

| Receiving unit |

703

| Processing unit |

702

| Sending unit |

FIG. 7

801

| Sending unit |

802

| Receiving unit |

803

| Loading unit |

804

| Playing unit |

FIG. 8

901

| Segmentation unit |

902

| Determining unit |

903

| Selection unit |

904

| Synthesis unit |

FIG. 9

1001

| Segmentation unit |

1002

| Determining unit |

1003

| Selection unit |

1004

| Storage unit |

FIG. 10

1100

Terminal device

1101

Processor

1102

Transceiver

1105

1103

Memory

1104

Display

FIG. 11

1200

Server

1201

Processor

1203

Transceiver

1204

1202

Memory

FIG. 12

## INTERNATIONAL SEARCH REPORT

| International application No. |
| --- |
| **PCT/CN2019/115889** |

**A. CLASSIFICATION OF SUBJECT MATTER**

H04N 21/23(2011.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNTXT, CNABS, CNKI, VEN, USTXT, EPTXT, WOTXT: 视频, 播放, 服务器, 终端, 请求, 地址, 响应, 打点, 位置, 存储, 保存; video, play, server, terminal, request, address, response, answer, dot, position, store

**C. DOCUMENTS CONSIDERED TO BE RELEVANT**

| Category* | Citation of document, with indication, where appropriate, of the relevant passages | Relevant to claim No. |
| --- | --- | --- |
| X | CN 104240741 A (HANGZHOU HIKVISION DIGITAL TECHNOLOGY CO., LTD.) 24 December 2014 (2014-12-24)<br>description, paragraphs [0025]-[0078] | 1-20 |
| A | CN 106375860 A (TENCENT TECHNOLOGY SHENZHEN CO., LTD.) 01 February 2017 (2017-02-01)<br>entire document | 1-20 |
| A | CN 105872806 A (SUZHOU HUAWU INFORMATION TECHNOLOGY CO., LTD.) 17 August 2016 (2016-08-17)<br>entire document | 1-20 |
| A | CN 103067386 A (SUZHOU HAN CHEN DIGITAL TECHNOLOGY CO., LTD.) 24 April 2013 (2013-04-24)<br>entire document | 1-20 |
| A | CN 104754415 A (BEIJING QIYI CENTURY SCIENCE & TECHNOLOGY CO., LTD.) 01 July 2015 (2015-07-01)<br>entire document | 1-20 |
| A | US 2010316359 A1 (MALLY JAMES) 16 December 2010 (2010-12-16)<br>entire document | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 December 2019** | **07 January 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/115889**

| Patent document cited in search report | | | Publication date (day/month/year) | Patent family member(s) | | | Publication date (day/month/year) |
|---|---|---|---|---|---|---|---|
| CN | 104240741 | A | 24 December 2014 | CN | 104240741 | B | 16 June 2017 |
| CN | 106375860 | A | 01 February 2017 | None | | | |
| CN | 105872806 | A | 17 August 2016 | None | | | |
| CN | 103067386 | A | 24 April 2013 | None | | | |
| CN | 104754415 | A | 01 July 2015 | CN | 104754415 | B | 09 February 2018 |
| US | 2010316359 | A1 | 16 December 2010 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811434790